Europäisches Patentamt

European Patent Office

Office européen des brevets

(19)

(11) **EP 1 418 539 A2**

(12) **EUROPEAN PATENT APPLICATION**

(43) Date of publication:
**12.05.2004 Bulletin 2004/20**

(51) Int Cl.7: **G06N 3/04**, G06N 3/08

(21) Application number: **03256157.3**

(22) Date of filing: **30.09.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• Depold, Hans R.<br>  **Bolton, CT 06043 (US)**<br>• Sirag, David J.<br>  **Ellington, CT 06029 (US)** |
| (30) Priority: **30.09.2002 US 261472** | (74) Representative: **Leckey, David Herbert**<br>**Frank B. Dehn & Co.,**<br>**European Patent Attorneys,**<br>**179 Queen Victoria Street**<br>**London EC4V 4EL (GB)** |
| (71) Applicant: **UNITED TECHNOLOGIES CORPORATION**<br>**Hartford, CT 06101 (US)** | |

(54) **Physics based neural network**

(57)     A physics based neural network (PBNN) (20) comprising a plurality of nodes (29, 31, 33, 35) each node comprising structure for receiving at least one input (25), and a transfer function for converting the at least one input (25) into an output (22) forming one of the at least one inputs to another one of the plurality of nodes, at least one training node set comprising the at least one input (21) to one of the plurality of nodes, at least one input node set comprising the at least one input to the plurality of nodes, and a training algorithm for adjusting each of the plurality of nodes, wherein at least one of the transfer functions is different from at least one other of the transfer functions and wherein at least one of the plurality of nodes is a PBNN.

*FIG. 2*

**Description**

BACKGROUND OF THE INVENTION

(1) Field of the Invention

The present invention relates to a Physics Based Neural Network (PBNN) for reverse engineering complex systems. More specifically, the present invention relates to PBNNs, and a method for employing them, for modeling the structure of complex physical systems, training using incomplete input data, and producing expected outputs for the system over a broad range of inputs.

(2) Description of Related Art

A neural network is a multilayered, hierarchical arrangement of identical processing elements, also referred to as neurons. Each neuron can have one or more inputs but only one output. Each neuron input is weighted by a coefficient. The output of a neuron is typically a function of the sum of its weighted inputs and a bias value. This function, also referred to as an activation function, or sometimes a transfer function, is often a sigmoid function. That is, the activation function may be S-shaped, monotonically increasing and asymptotically approaching fixed values as its input(s) respectively approaches positive or negative infinity. The sigmoid function and the individual neural weight and bias values determine the response of the neuron to input signals.

In the hierarchical arrangement of neurons, the output of a neuron in one layer may be distributed as an input to one or more neurons in a next layer. A typical neural network may include an input layer and two (2) distinct layers; namely, an input layer, an intermediate neuron layer, and an output neuron layer. The nodes of the input layer are not neurons. Rather, the nodes of the input layer have only one input and basically provide the input, unprocessed, to the inputs of the next layer.

The use of neural networks often involves two (2) successive steps. First, the neural network is trained on known inputs having known output values (or classifications). As the training inputs are fed to the neural network, the values of the neural weights and biases are adjusted (e.g., a back-propagation technique) such that the output of the neural network of each individual training pattern approaches or matches the known output. In this way the weights and biases converge towards a locally optimal solution or a minimized an error. In practice, the system is not trained to the point where it converges to an optimal solution because that would require all the data. The system would then be "over trained" such that it would be too specialized to the training data and might not be good at classifying inputs which differ, from those in the training set.

Once the neural network is trained, it can then be used to classify unknown inputs in accordance with the weights and biases determined during training. If the neural network can classify the unknown input with confidence, one of the outputs of the neurons in the output layer will be much higher than the others.

To ensure that the weight and bias terms do not diverge, the algorithm uses small steps. Consequently, convergence is slow. Also, the number of neurons in the hidden layer cannot easily be determined a priori. Consequently, multiple time-consuming experiments are often run to determine the optimal number of hidden neurons.

A related alternative to neural networks is Bayesian networks. Bayesian networks use hypotheses as intermediaries between data (e.g., input feature vectors) and predictions (e.g., classifications). The probability of each hypothesis, given the data may be estimated. A prediction is made from the hypotheses using Conditional (posterior) probabilities of the hypotheses to weight the individual predictions of each of the hypotheses. A Bayesian network includes variables and directed edges between the variables, thereby defining a directed acylic graph (or "DAG"). Each variable can assume any of a finite number of mutually exclusive states.

Assuming that the structure of the Bayesian network is known and the variables are observable, only the set of conditional probability tables need be learned. These tables can be estimated directly using statistics from a set of learning examples. If the structure is known but the variables are hidden, Bayesian networks may be trained, as was the case with neural networks. Using prior knowledge can shorten the learning process.

Support vector machines (or "SVMs") are another type of trainable classifier. SVMs are reportedly more accurate at classification than naive Bayesian networks in certain applications, such as text classification. They are also reportedly more accurate than neural networks in certain applications, such as reading handwritten characters. Unfortunately, however, SVMs reportedly take longer to train than naive Bayesian classifiers.

An object to be classified may be represented by a number of features. If, for example, the object to be classified is represented by two features, it may be represented by a point in two dimensional space. Similarly, if the object to be classified is represented by n features, also referred to as a "feature vector", it may be represented by a point in n-dimensional space. The simplest form of an SVM defines a plane in the n-dimensional space (also referred to as a hyperplane) which separates feature vector points associated with objects "in a class" and feature vector points associated with objects "not in the class". A number of classes can be defined by defining a number of hyperplanes. The hyperplane defined by a trained SVM maximizes a distance (also referred to as an Euclidean distance) from it to the closest points "in the class" and "not in the class". Maximum separation reduced overlap and ambiguity. The SVM defined by the hyperplane that maximizes the distances "d" is therefore likely robust to input noise.

What is therefore needed is a neural based apparatus that incorporates the benefits of learning from training data to converge upon a solution for data gathered external to the training data set, but which has a multiplicity of transfer functions representing heuristic knowledge of the physical system being modeled, is scalable, readily understood, and can be applied to partially understood systems for purposes of reverse engineering.

## SUMMARY OF THE INVENTION

Accordingly, it is an object of the present invention to provide a PBNN, and a method for employing the PBNN, for modeling the structure of complex physical systems, training using incomplete input data, and producing expected outputs for the system over a broad range of inputs.

In accordance with the present invention, a physics based neural network (PBNN) which comprises a plurality of nodes each node comprising structure for receiving at least one input, and a transfer function for converting the at least one input into an output forming one of the at least one inputs to another one of the plurality of nodes, at least one training node set comprising the at least one input to one of the plurality of nodes, at least one input node set comprising the at least one input to the plurality of nodes, and a training algorithm for adjusting each of the plurality of nodes, wherein at least one of the transfer functions is different from at least one other of the transfer functions and wherein at least one of the plurality of nodes is a PBNN.

In accordance with the present invention, a method of modeling physical systems using physics based neural networks (PBNN) comprises the step of creating a PBNN comprising a plurality of nodes each node comprising structure for receiving at least one input, and a transfer function for converting the at least one input into an output forming one of the at least one inputs to another one of the plurality of nodes, at least one training node set comprising the at least one input to one of the plurality of nodes, at least one input node set comprising the at least one input to the plurality of nodes, and a training algorithm for adjusting each of the plurality of nodes, wherein at least one of the transfer functions is different from at least one other of the transfer functions and wherein at least one of the plurality of nodes is a PBNN, connecting each of the plurality of nodes in accordance with a physical model, specifying the transfer functions of each of the plurality of nodes, designating at least one of the plurality of nodes as a training quantity.

## BRIEF DESCRIPTION OF THE DRAWINGS

FIG. 1 - A graphic representation of a rankine oval computed using a PBNN of the present invention.
FIG. 2 - A PBNN of the present invention used to model a rankine oval.
FIG. 3 - A PBNN of the present invention for computing a coordinate transform which forms a node in a larger PBNN.
FIG. 4 - A PBNN of the present invention for computing a distance which forms a node in a larger PBNN.
FIG. 5a - A PBNN of the present invention for computing source/sink velocities which forms a node in a larger PBNN.
FIG. 5b - A PBNN of the present invention for computing doublet velocities which forms a node in a larger PBNN.
FIG. 5c - A PBNN of the present invention for computing vortex velocities which forms a node in a larger PBNN.
FIG. 6 - a diagram of the inputs and outputs of a prior art neural network trained to model a sigmoid function.
FIG. 7 - a diagram of the inputs and outputs of a PBNN of the present invention trained to model a sigmoid function.

## DETAILED DESCRIPTION OF THE PREFERRED EMBODIMENT(S)

The present invention is drawn to Physics Based Neural Networks (PBNN). PBNNs, as will be described more fully below, provide efficient computational mechanisms for the identification, representation, and solution of physical systems based on a partial understanding of the physics and without the need for extensive experimental data. Therefore, PBNNs form quasi-neural networks which recognize the fractal nature of real neural networks. As used herein "fractal" relates to the property of PBNNs scale up and down the concepts embedded within them. Scaling down is the process whereby individual neural functions are tailored using domain knowledge to create fully structured but partially understood processes that can be trained. Scaling up is the process whereby whole heuristic or computational processes are configured in a neural network and trained without the need for extensive experimental data.

A PBNN is a network of nodes, each of which consists of a set of inputs, at least one output, and a transfer function between them. A single PBNN node is defined by specifying its transfer function and designating the outputs of other PBNN nodes, or raw inputs, as its input quantities. Processing through the node consists of collecting the input quantities, evaluating the transfer function, and setting the output to the result. The transfer function can consist of a connected collection of other PBNNs (called internal nodes) or any other mathematical relationship defined between the input and output values.

Assembling a PBNN for a given problem is done by decomposing its defined set of mathematical equations into a connected collection of nodes. Complex functions can then be decomposed of collections of more elementary functions, down to a reasonably low level of definition. Elementary PBNN nodes have been used to represent simple mathematical operations like sums or products, exponentials, and elementary trigonometric functions. Since a PBNN node in one network can consist of a complete PBNN itself, the internal transfer function can become as complex as desired.

One interesting type of elementary PBNN node is the "parameter" node, where the underlying transfer function simply sets a constant output regardless of input. These nodes are used to represent parameters in a computation. They can be, however, designated as adaptive, and thereby tuned to a given problem.

A complete PBNN is built from a set of PBNN nodes, with the internal connectivity defined by the underlying model. Once the individual nodes are defined and connected as desired, the user then selects which nodes will represent "output" quantities in the overall calculation. Additional nodes are designated as "training" quantities, which are modified as the network is tuned to a given problem. Finally, a set of nodes is designated as "input" nodes, whose values are set externally during each processing run. The collection of PBNNs, input node set, training node set, and output node set, makes up a complete PBNN.

PBNNs are run in two stages. The first, training stage, consists of presenting a known set of inputs and outputs to the PBNN, and adjusting the training nodes to minimize the resulting error. This can be done in a variety of ways including, but not limited to, varieties of the back propagation algorithm used in traditional neural networks, conjugate gradient methods, genetic algorithms, and the Alopex algorithm.

Once the PBNN has been trained, in the second stage it can then be evaluated for new input data. Usually a trained network can be run quickly, thus providing a rapid, approximate model of the underlying system.

PBNNs represent specific sets of functionality in a reasonably small set of nodes, each of which is related to the problem at hand. The design of a PBNN network is usually performed by one with knowledge that can be encoded into the PBNN by the PBNN designer.

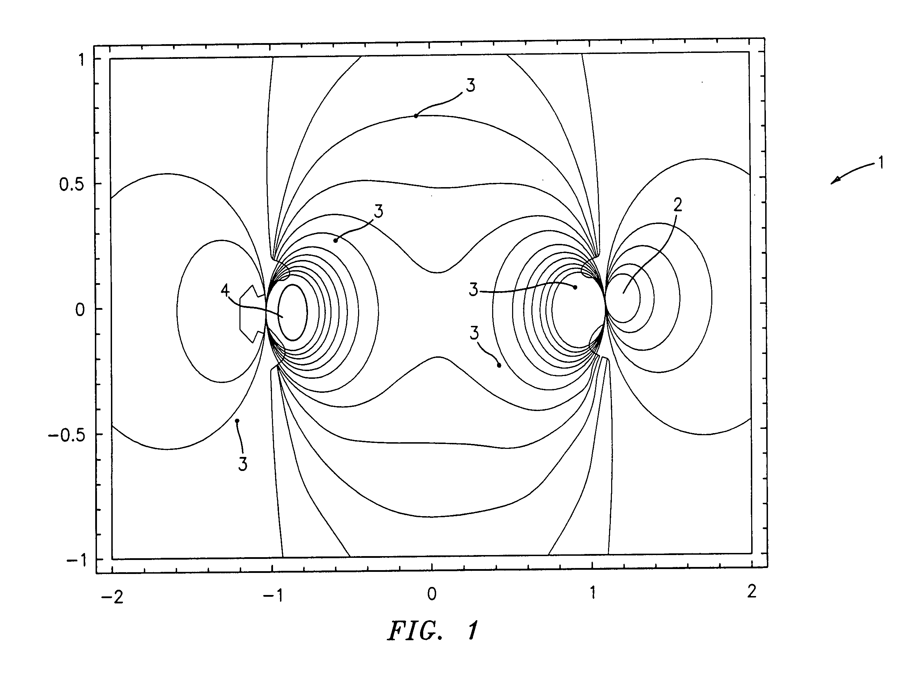

With reference to Fig. 1, there is illustrated the flow pattern of a rankine oval 1 to which a PBNN of the present invention can be directed. A rankine oval 1 is a source-sink pair embedded in a constant velocity background flow and the resulting oval-shaped flow caused by this source-sink pair. The rankine oval is used herein as an exemplary physical system that may be analyzed by a PBNN. Once the physical characteristics of a system are known or can be approximated, a generalized PBNN can be constructed which models the characteristics of the system. As will be described more fully below, sample inputs may be measured, inputted into the PBNN, an output generated, and the resulting error used for back propagation and adjustment of weight and bias values.

The contour lines of Fig. 1 represent lines of equal pressure in the pressure field characterized by the outputs of a PBNN of the present invention. Note the presence of source 4 and sink 2. There is illustrated a plurality of measurement points 3, each having an x and y coordinate, at which there is measured a flow velocity. Use of these measurement points 3 allows one to train a PBNN in a manner sufficient to permit the input of any x and y coordinate within the rankine oval 1 and to output the velocity of the flow corresponding to the input point location. Entering as input points the points comprising the area of the illustrated rankine oval and plotting the resultant outputs gives rise to the rankine oval 1.

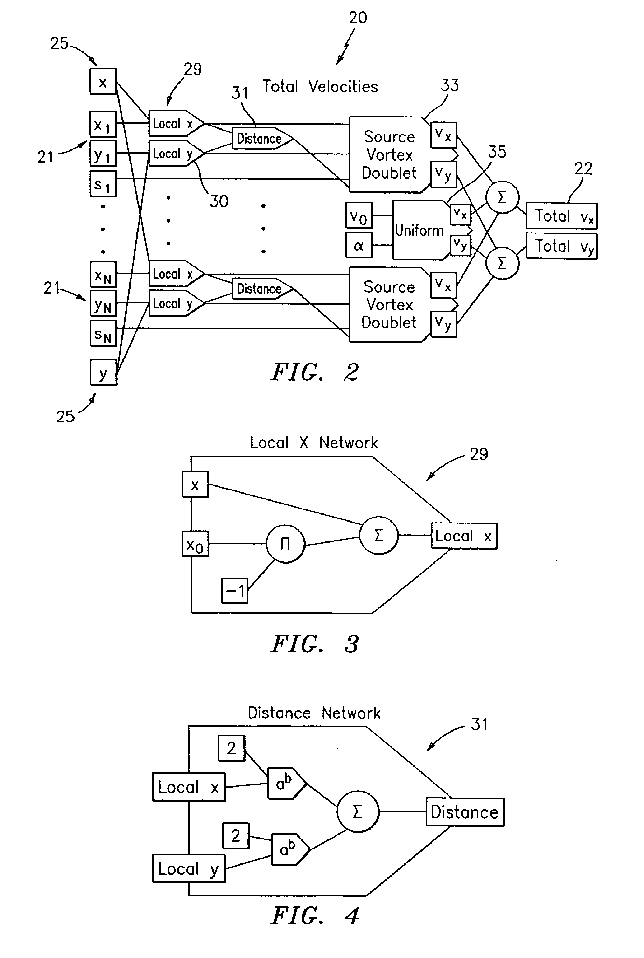

With reference to Fig. 2, there is illustrated a PBNN 20 configured to model the operation of the rankine oval 1 of Fig. 1. Since this system consists of a collection of sources and sinks, the PBNN is constructed as collections of internal nodes labeled local x and local y, distance 31 and source/vortex/ doublet 33 and their corresponding inputs 21. One of these collections is embedded into the body of the PBNN for each source or sink in the physical system. The inputs 21 describe the x, y coordinates and the strength of the corresponding source or sink. Each PBNN input 21 is therefore comprised of three components indicated by $x_N$, $y_N$, and $s_N$. In the present example, there are one source and one sink and, hence, the PBNN 20 is configured to accept six PBNN inputs 21.

In addition to PBNN inputs 21, there are multiple layers of nodes. Local coordinate nodes 29 perform a coordinate transformation on the PBNN inputs 21 from the x,y system of the rankine oval to a coordinate system comprised of relative distances to the source or sink. The output of this transformation comprises a local x and local y coordinate. Distance nodes 31 compute a distance from the PBNN inputs 21 to the source or sink. Velocity nodes 33 compute a velocity in the x and y directions receiving as inputs the local x and local y coordinate, the strength of flow measurement, and the distance outputted by the distance nodes 31. In addition, uniform flow assumption node 35 receives as input a velocity flow, $v_0$, and an angle of flow, a. The outputs of the velocity nodes 33 and the uniform flow assumption node 35, are summed to produce outputs 22 representing the total velocity in the x and y direction at the point in the flow field (x, y) specified by the input values (25).

As can be seen, PBNN 20 resembles a diagrammatic implementation of the solution to a rankine oval. Each node receives an input or inputs, applies a predefmed transfer function, and produces an output. These outputs may be used to form the inputs to successive layers of nodes within PBNN 20. In addition, each node may itself be a PBNN.

With reference to Fig. 3, there is illustrated in detail a local coordinate node 29 which is itself a PBNN. Specifically, there is illustrated a local coordinate node 29 for computing a local x. Inputs x and $x_0$ are inputted to local coordinate node 29. $X_0$ is multiplied by -1 and summed with x. The effect is one of subtracting $x_0$ from x with the resulting output, local x, being outputted to the next node.

With reference to Fig. 4, there is illustrated in detail a distance node 31. Inputs local x and local y are inputted to distance node 31. Both local x and local y are squared and then added to each other to produce an outputted distance.

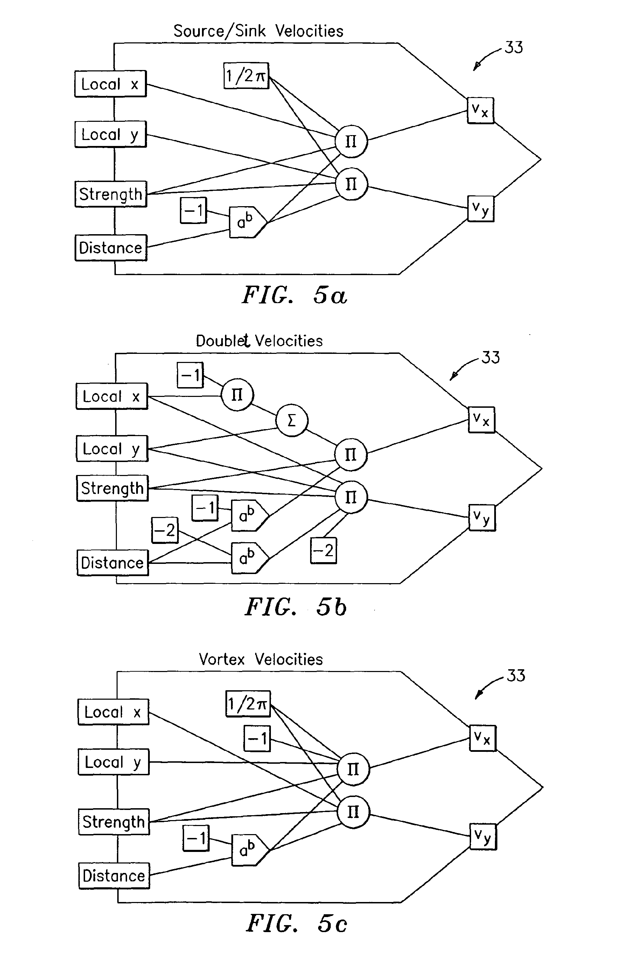

In a similar fashion, with reference to Fig. 5a-c, there is illustrated the detailed configurations of three alternative embodiments of a velocity node 33. In the present example, it is possible to compute source/sink velocities, vortex velocities, or doublet velocities depending on which the embodiments is implemented.

The five points 3 in Fig. 1 represent data coordinates for which the flow field is known. These points 3 are used to train the PBNN.

Returning to Fig. 2, once the PBNN 20 has been trained on the five measurement points 3, it can receive as inputs 25 any x and y coordinate. Once inputted, inputs 25 propagate through PBNN 20 to produce outputs 22. In this manner, the PBNN 20, having been trained on incomplete information describing a small portion of the flow characteristics of the rankine oval, is capable of accurately computing the flow characteristics at any desired coordinate.

While herein illustrated with particular application to rankine ovals, the present invention is not so limited. Rather the present invention is drawn to applications of PBNNs in any domain wherein complete analytical models are unavailable. Indeed, even most well-understood domain models contain varying levels of approximation, which must be accounted for in the results. PBNNs are inherently approximate models, which are tuned to a given problem at hand. Once the underlying model is incorporated into the PBNN, sets of training data from a particular situation of interest can be used to tune the network as much as possible.

PBNNs are particularly well suited to systems for which no complete solution is known, but more limited solutions are available in certain restricted cases. For such problems, a PBNN designed with sufficient generality that it can adequately represent several of the limiting cases provides a means for attacking the overall problem. In a sense, the PBNN functions to provide a nonlinear interpolation between known solutions. If the set of known solutions is broad enough, the resulting network provides a reasonable model of the complete system behavior.

Specific areas of application for PBNNs include, but are not limited to, CFD, Acoustics, Mechanical Diagnostics (Engine Gas Path as well as Elevator Doors).

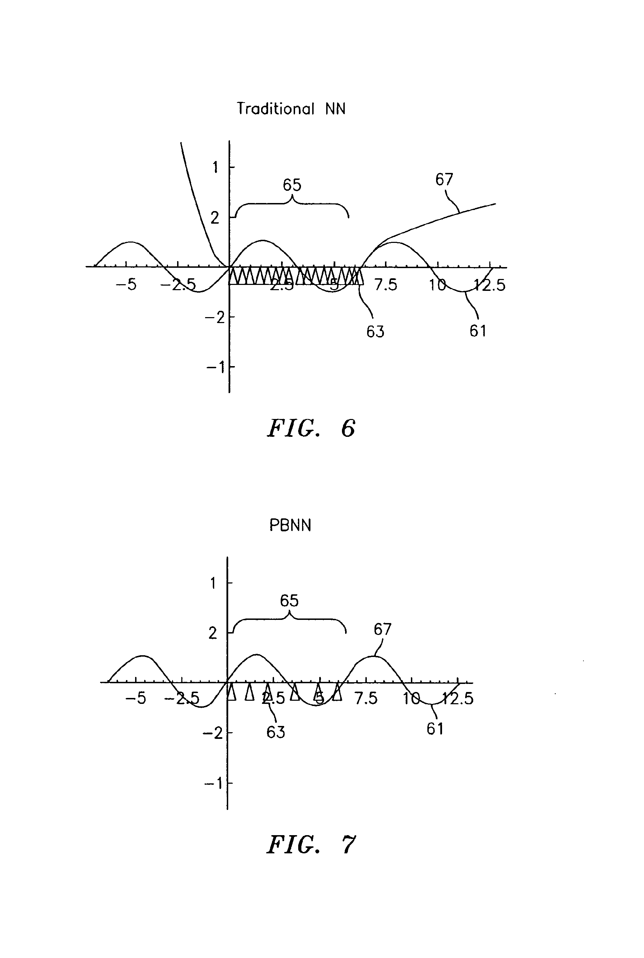

When a PBNN is constructed to mirror the functionality of a known system and trained on sample data, it is then capable of describing the functionality of the system both forward and backwards in time in a manner not possible with traditional neural networks. Fig.6 illustrates the inputs and outputs of a neural network trained to recognize a sinusoidal function. Input points 23 are represented as triangles on the x-axis. A relatively large number of input points 63 are measured over a data range 65 to determine the behavior of sinusoid 61. Data range 65 is the subset of sinusoid 61 within which one has access to measuring sample input points 63. After training the neural network on sample input points 63, the neural network can be fed as an input any point within data range 65 to produce an output point. If done so repeatedly, output line 67 is formed representing the output of the neural network over a range including, but not limited to, data range 65. As can be seen, output line 67 tracks sinusoid 61 closely within data range 65 but diverges substantially beyond data range 65. This is a result of neural networks having no "understanding" of the system being modeled outside the data range over which they are modeled.

Because PBNNs are configured to encode design knowledge, they are capable of being efficiently trained to model complex processes such as a sinusoidal function. With reference to Fig. 7, there is illustrated a sinusoid 61 and sample input points 63. Note that the density of sample input points 63 measured over data range 65 is less than that of the neural network illustrated in Fig. 6. Note as well that the resulting output line 67 accurately tracks the sinusoid outside of data range 65.

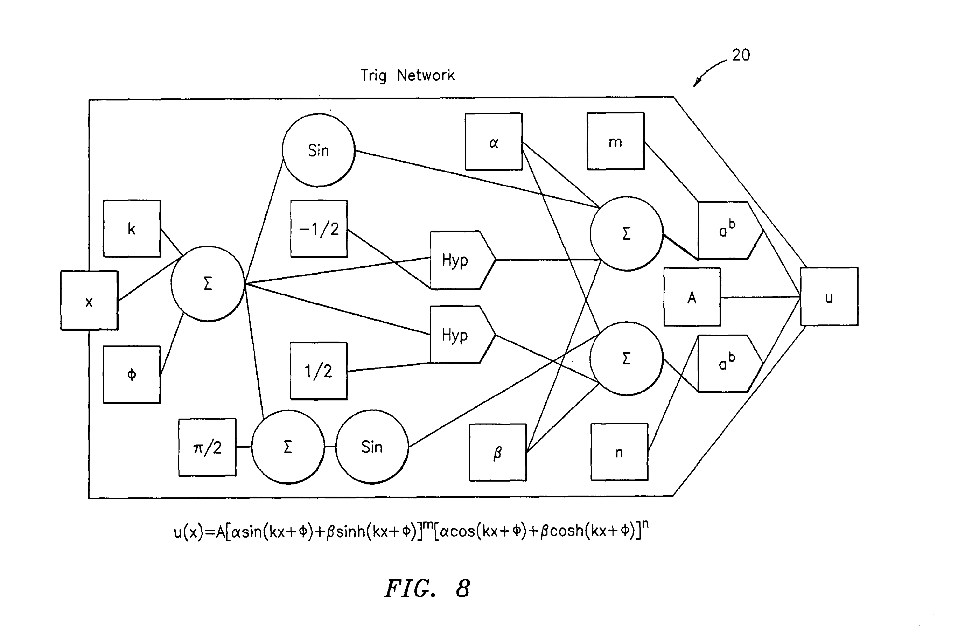

With reference to Fig. 8, there is illustrated a PBNN for modeling trigonometric functions. Specifically, PBNN 20 is constructed to model any signal of a form:

$$u(x) = A[\alpha \sin(kx+f) + \beta \sinh(kx+f)]^m [\alpha \cos(kx+f) + \beta \cosh(kx+f)]^n$$

PBNN 20 can therefore represent any trigonometric function by specifying the parameters as follow:

|  | $\alpha$ | $\beta$ | m | n |
|---|---|---|---|---|
| Sin | 1 | 0 | 1 | 0 |
| Cos | 1 | 0 | 0 | 1 |
| Tan | 1 | 0 | 1 | -1 |
| Cot | 1 | 0 | -1 | 1 |
| Sinh | 0 | 1 | 1 | 0 |

(continued)

|  | α | β | m | n |
|------|---|---|----|----|
| Cosh | 0 | 1 | 0  | 1  |
| Tanh | 0 | 1 | 1  | -1 |
| Coth | 0 | 1 | -1 | 1  |
| Sec  | 1 | 0 | 0  | -1 |
| Csc  | 1 | 0 | -1 | 0  |
| Sech | 0 | 1 | 0  | -1 |
| Csch | 0 | 1 | -1 | 0  |

Since the design of the PBNN is directly related to a task at hand or system under examination, certain properties of interest in the underlying model can be represented by particular nodes in the PBNN. The trained results can therefore be ascribed some meaning in the overall model. While attempts have been made in the past to attach significance to the values of the weights in traditional neural networks, the results are uncertain at best and definitely lack the strong tie to the underlying model that is guaranteed in PBNNs.

In addition, because a PBNN node consists of a set of inputs, an output, and a transfer function, a neural network can itself be used as a node in a PBNN. This can be done wherever neural networks are known to be well-suited to a particular task, or wherever a reasonable analytical model is unavailable.

As can be seen, PBNNs have the underlying system model built into their structure. They thus can be constructed so that a small set of training parameters is needed to guarantee their convergence to the underlying model, and the behaviors represented by the underlying network are those contained within the underlying model, regardless of what sets of data are used to adjust the adaptable parameters.

It is apparent that there has been provided in accordance with the present invention a Physics Based Neural Network (PBNN) for reverse engineering complex systems. While the present invention has been described in the context of specific embodiments thereof, other alternatives, modifications, and variations will become apparent to those skilled in the art having read the foregoing description. Accordingly, it is intended to embrace those alternatives, modifications, and variations as fall within the broad scope of the appended claims.

**Claims**

1. A physics based neural network (PBNN) comprising:

   a plurality of nodes each node comprising:

   means for receiving at least one input; and
   a transfer function for converting said at least one input into an output forming one of said at least one inputs to another one of said plurality of nodes;

   at least one training node set comprising said at least one input to one of said plurality of nodes;
   at least one input node set comprising said at least one input to said plurality of nodes; and
   a training algorithm for adjusting each of said plurality of nodes;

   wherein at least one of said transfer functions is different from at least one other o said transfer functions and wherein at least one of said plurality of nodes is a PBNN.

2. The PBNN of claim 1 wherein said input data comprises training data.

3. The PBNN of claim 1 or 2 wherein said training algorithm is selected from the group consisting of back propagation, conjugate gradient, genetic, and Alopex.

4. The PBNN of any preceding claim wherein at least one of said plurality of nodes converts said at least one input into a constant output.

5. The PBNN of any preceding claim wherein at least one of said nodes is a neural network.

6. The PBNN of any preceding claim wherein said plurality of nodes are configured to model a physical system.

7. The PBNN of claim 6 wherein said physical system is selected from the group consisting of Acoustical Systems, Engine Gas Path Mechanical Diagnostics, Elevator Doors, and CFD's.

8. A method of modeling physical systems using physics based neural networks (PBNN) comprising the step of:

   creating a PBNN comprising:

   a plurality of nodes each node comprising:

   means for receiving at least one input; and
   a transfer function for converting said at least one input into an output forming one of said at least one inputs to another one of said plurality of nodes;

   at least one training node set comprising said at least one input to one of said plurality of nodes;

at least one input node set comprising said at least one input to said plurality of nodes; and

a training algorithm for adjusting each of said plurality of nodes;

wherein at least one of said transfer functions is different from at least one other of said transfer functions and wherein at least one of said plurality of nodes is a PBNN;
connecting each of said plurality of nodes in accordance with a physical model; specifying said transfer functions of each of said plurality of nodes;
designating at least one of said plurality of nodes as a training quantity.

9. The method of claim 8 wherein said training algorithm is selected from the group consisting of back propagation, conjugate gradient, genetic and Alopex.

10. The method of claim 8 or 9 wherein said creating said PBNN comprises the additional step of modeling said physical system as a plurality of mathematical equations and decomposing said mathematical equations into said plurality of nodes.

FIG. 1

EP 1 418 539 A2

*FIG. 2*

*FIG. 3*

*FIG. 4*

FIG. 5a

FIG. 5b

FIG. 5c

Traditional NN

*FIG.  6*

PBNN

*FIG.  7*

Trig Network

$u(x) = A[\alpha sin(kx+\phi) + \beta sinh(kx+\phi)]^m[\alpha cos(kx+\phi) + \beta cosh(kx+\phi)]^n$

FIG. 8